# EUROPEAN PATENT SPECIFICATION

(11) **EP 0 766 779 B1**
(45) Date of publication and mention of the grant of the patent: **06.10.1999**
(21) Application number: 95923643.1
(22) Date of filing: 19.06.1995
(51) Int. Cl.: F01K 3/08, F01K 23/10

(54) **ENGINE ASSEMBLY COMPRISING AN INTERNAL COMBUSTION ENGINE AND A STEAM ENGINE**
MASCHINENSATZ BESTEHEND AUS BRENNKRAFTMASCHINE UND DAMPFMOTOR
GROUPE MOTEUR CONSTITUE D'UN MOTEUR A COMBUSTION INTERNE ET D'UN MOTEUR A VAPEUR

(30) Priority: 20.06.1994 SE 9402180
(43) Date of publication of application: 09.04.1997
(73) Proprietor: RANOTOR UTVECKLINGS AB, 193 40 Sigtuna (SE)
(72) Inventor: PLATELL, Ove, S-193 40 Sigtuna (SE)
(74) Representative: Nilsson, Karl Ingvar
(86) International application number: PCT/SE95/00754
(87) International publication number: WO 95/35433

(56) References cited:
- EP-A- 0 439 754
- DE-C- 686 911
- PATENT ABSTRACTS OF JAPAN, Vol. 7, No. 283, M-263; & JP,A,58 158 304 (NIPPON KOKAN K.K.), 20 Sept. 1983.

## Description

The present invention refers to an engine assembly comprising an internal combustion engine and a steam engine of the displacement type, both connected to a driving assembly, e.g. a common driving shaft , and a heat exchanger by which the heat losses of the internal combustion engine from the exhaust gases and/or cooling water are utilized for generation of steam to the steam engine, in addition to which excess steam from the heat exchanger, which is not required for driving the steam engine is supplied to a steam buffer, which is designed to supply to the steam engine steam of high power density for short time periods.

Since long time ago it is known to utilize the combustion gases from the internal combustion engine in order to improve the efficiency, and here internal combustion engine refers to otto- and diesel engines. DE-C-686 911, for instance, discloses an engine assembly comprising an internal combustion engine and a steam engine, in which assembly the exhaust gases from the internal combustion engine are heating a steam generator from which the steam is fed via a super heater to a displacement type steam engine of compound type. The two engines are operated with a high thermal efficiency independent of each other, due to the fact that the steam engine uses the waste heat from the internal combustion engine and needs only additional heating for the superheating purpose. The engine assembly reacts slowly, however, and with a restricted power density, upon increased power demand. The most common device today is an exhaust driven turbo turbine driving a turbo compressor for supercharging of the combustion air, which will give an improvement at high shaft speeds of the engine. In large ships it is also customary to use steam turbines in order to utilize the heat from the exhaust gases of diesel engines. It also has been discussed to use exhaust gas heat from an internal combustion engine in a Rankine cycle process with the purpose to increase the engine efficiency. Moreover, with conventional steam technology the steam engine with its auxiliary system will be too bulky and heavy. Therefore it has not been considered as a realistic alternative in vehicles where weight and space demands are of great importance.

From a thermodynamic point of view a piston steam engine would be a possible solution to utilize the heat losses in an internal combustion engine. However, in that case the weight and space demand must be considerably more reduced compared to present steam technology.

The object of the invention is to accomplish an engine assembly of the introductorily mentioned type, with essentially smaller dimensions and weight and which optimizes the flexibility which is built-in in a rational steam engine system.

This has been obtained, according to the invention, by the fact that the steam engine of the displacement type has built-in braking ability, and that the internal combustion engine is designed to operate at full or close to full load at normal driving cycles and simultaneously the steam engine is designed to operate at low load.

The invention is based on the utilization of a steam buffer of that type which is described in detail in an application filed together with this application, called "Steam buffer for a steam engine plant ", to which is referred regarding details about the steam buffer. This steam buffer is equipped with a high temperature connection for steam, preferably with the temperature 500 °C and the pressure 250 bar, and a low temperature connection for feed water and therebetween a solid heat exchanging material with a large number of pressure resistant flow channels with a hydraulic diameter less than 0.5 mm for the steam and feed water between the two connections. It has been shown that an energy density of not less than 500 kJ/kg and a power density of 100 kW/kg is possible with this design, which can be compared with a lead-acid battery with the energy density of 100 kJ/kg and power density of only 100 W/kg.

Almost all vehicle engines are used at very low power output compared to the maximum power output, which has to be available in some situations and in that case mostly during short periods of time. The fuel consumption for a vehicle will therefore be determined by the efficiency at low loads. The invention is also based on the knowledge that an internal combustion engine has its highest efficiency at high loads whereas a steam engine of displacement type has the highest efficiency at low loads. A diesel engine with an efficiency of 45 % at these conditions will get an additional efficiency of 10-15 percentage units from the steam engine, and hence the total efficiency can be increased to approximately 55-60 %. The diesel engine shall be designed so small that it will operate at full load in normal driving cycles. The steam engine will be designed such that it will operate at very low load when it uses the energy from the diesel exhaust gases, and the total driving system operates in normal driving cycles. Short requirements of high power output can be supplied overwhelmingly by the steam buffer, which can immediately increase the power output from the steam engine e.g. from 30 kW at 5 % load at normal driving to 600 kW at 100 % load.

Due to the high contribution from the steam engine to the power performance, but small contribution to the total weight and space demand, a very high power density of the total engine assembly is achieved.

One of the reasons that the steam engine should be of displacement type is that such a steam engine can be designed to give an effective engine brake capacity, which is of great importance in many vehicles. The braking energy can also be regenerated in the steam buffer.

The very high braking capacity of the displacement steam engine will save or maybe replace the conventional brakes in applications were overheating problems exist.

The engine assembly according to the invention is specially suitable for propulsion of heavy vehicles like trucks and long freight trains or boats, and especially boats that require high power output for short periods of time in order to obtain planing velocity rapidly.

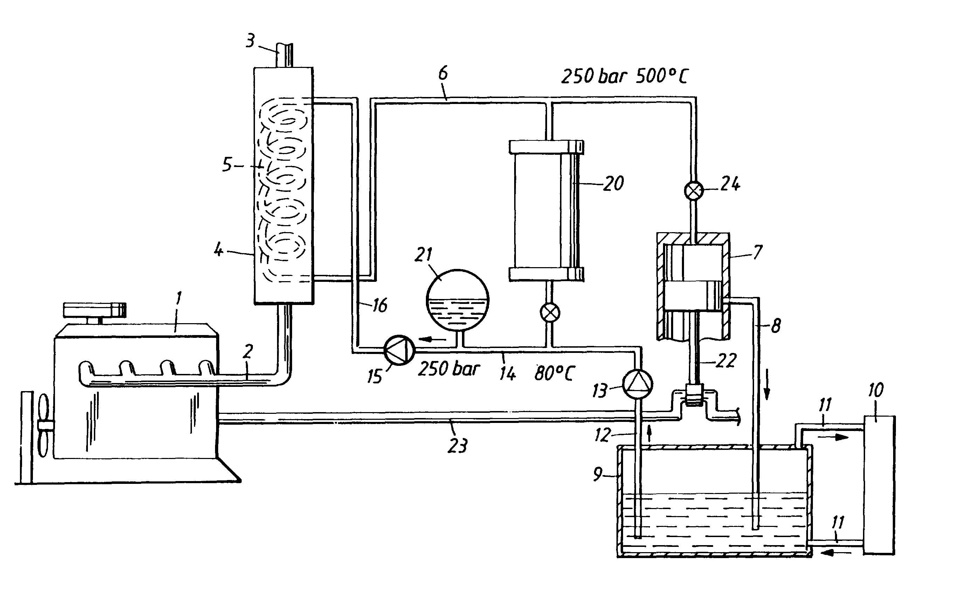

The invention is described in more detail in the following with reference to the attached drawing, which schematically illustrates an example of an embodiment of the engine assembly for a heavy vehicle application according to the invention.

The drawing illustrates an internal combustion engine 1 of diesel type ( can also be a Otto type which has larger exhaust heat losses to regenerate) with an exhaust pipe 2, which is connected to the exhaust pipe 3 via a heat exchanger 4. The heat from the cooling water can also be utilized especially if the water is pressurized. For a marine application , where the feed water shall be heated from approximately 20 °C the cooling water can be used for preheating the feed water to about 80 - 100 °C, and after that the exhaust gases can be used. The illustrated heat exchanger has a heat absorbing part 5 forming a part of a pipe for steam 6, which is dimensioned for high pressure as 250 bar and a steam temperature of 500 °C and leads to a steam engine 7 of axial piston type. From the outlet of the steam engine leads a pipe 8 to a condenser 9, which is connected to a cooler 10 by the pipes 11. From condenser 9 there is a pipe 12 arranged to a feed water pump 13, which pressurizes the water to 250 bar in a pipe 14 to a circulation pump 15, from which a pipe 16 leads the feed water to the heat absorbing part 5 of the heat exchanger 4, where the feed water is vaporized and heated to 500 °C by the heat exhaust gases from the pipe 2. Between the pipe 6 with the steam temperature 500 °C and the pipe 14 with the feed water temperature of approximately 80 °C is the above mentioned steambuffer 20 connected, and to the pipe 14 is further a pressure vessel 21 connected containing feed water and a gas cushion. The steam engine 7 is by a transmission 22 connected to a driving shaft 23, which is connected with the crankshaft of the engine 1.

The diesel engine 1 is dimensioned to operate at full load at normal driving cycles and drive the drive shaft 23, to which even the steam engine 7 is connected. The steam engine is dimensioned to operate at low loads at normal driving cycles. Both engines will then operate at almost their optimum efficiency. The steam to the steam engine 7 is generated in the heat exchanger 4 in an amount that is slightly larger than what is required at normal driving cycles. The excess steam is fed to the steam buffer 20, and the feed water in the steam buffer is pressed back to the pipe 14 and then further to the pressure vessel 21, where the gas cushion is compressed. When a high power output is required, e.g. at overtaking or at a strong upward slope, a control valve 24 will be opened in the pipe 6 to the steam engine 7 from a position corresponding to low load to a position corresponding to full load. Steam will then flow from the steam buffer 20 to the steam engine 7 with the highest or a required power capacity. For an application as a heavy truck where the average power at normal driving is about 80 kW would e.g. the diesel engine be designed to give 70 kW at 100 % load and the steam engine to give 30 kW at 5 % load. At normal driving - 80 kW - both engines will work at almost optimal efficiency and simultaneously a continuous charging of the steam buffer will take place if not fully charged. Since the steam engine has a maximum power output of 600 kW, the engine assembly can, if the steam buffer is charged, give 670 kW instantaneously. For how long time it is possible to obtain this power depends of course on the size of the steam buffer, which as mentioned can have an energy density of 500 kJ/kg.

The invention is of course not restricted to this shown and described example but can be modified in several ways within the scope of the inventive idea defined by the claims. The two engines can for instance be connected to different drive shafts of some kind of driving assembly. Further, a small steam generator can of course be connected to the steam pipe 6 for generation of steam as complement to the heat exchanger 4, if required, e.g. to keep the steam system warm when there is freezing hazard. As already mentioned the steam buffer has a very high energy density of 500 kJ/kg, and with a proper heat insulation there will be possibilities to store heat energy for long time periods. Hence, there are possibilities to run the engine assembly for a limited time period without running the internal combustion engine, i.e. without emission of exhaust gases.

## Claims

1. An engine assembly comprising an internal combustion engine (1) and a steam engine (7) of the displacement type having built-in braking ability, connected to a driving assembly (23), e.g. a common driving shaft, and a heat exchanger (4), by which the heat losses of the internal combustion engine from the exhaust gases and/or cooling water are utilized for generation of steam to the steam engine, in addition to which excess steam from the heat exchanger (4), which is not required for driving the steam engine is supplied to a steam buffer (20), which is designed to supply to the steam engine steam of high power density for short time periods, **characterized** in that (7) the internal combustion engine (1) is designed to operate at full or close to full load at normal driving cycles and simultaneously the steam engine (7) is designed to operate at low load.

2. An engine assembly according to claim 1, **characterized** in that the internal combustion engine (1) is a diesel engine and the steam engine (7) is a multi cylinder axial piston engine designed for a steam pressure of 250 bar and a steam temperature of 500°C.

3. An engine assembly according to claim 1 or 2, especially for propulsion of heavy vehicles like trucks, freight trains or boats, **characterized** in that the internal combustion engine (1) is designed to operate at full load when the steam engine (7) is operated at 5% load.

## Patentansprüche

1. Maschinensatz mit einem Motor (1) für innere Verbrennung und einer Dampfmaschine (7) vom Verdrängertyp mit eingebauter Bremsfähigkeit, die mit einer Antriebseinheit (23) verbunden sind, beispielsweise einer gemeinsamen Antriebswelle, und mit einem Wärmetauscher (4), durch den die Wärmeverluste des Motors für innere Verbrennung aus den Abgasen und/oder dem Kühlwasser benutzt werden, um Dampf für die Dampfmaschine zu erzeugen, wobei zusätzlich hierzu aus dem Wärmetauscher (4) überschüssiger Dampf, der nicht für den Betrieb der Dampfmaschine gebraucht wird, zu einem Dampfpuffer (20) zugeführt wird, der dazu ausgelegt ist, um die Dampfmaschine mit Dampf hoher Leistungsdichte während kurzer Zeiträume zu versorgen, dadurch gekennzeichnet, daß der Motor für innere Verbrennung (1) so ausgelegt ist, daß er mit Voll- oder annähernd Vollast bei normalen Antriebszyklen arbeitet, und daß die Dampfmaschine (7) so ausgelegt ist, daß sie gleichzeitig mit niedriger Last arbeitet.

2. Maschinensatz nach Anspruch 1, dadurch gekennzeichnet, daß der Motor (1) für innere Verbrennung ein Dieselmotor ist und daß die Dampfmaschine (7) eine mehrzylindrige Axialkolbenmaschine ist, die für einen Dampfdruck von 250 bar und eine Dampftemperatur von 500 °C ausgelegt ist.

3. Maschinensatz nach Anspruch 1 oder 2, insbesondere für den Antrieb von schweren Fahrzeugen wie Lastkraftwagen, Güterzügen oder Booten, dadurch gekennzeichnet, daß der Motor (1) für innere Verbrennung so ausgelegt ist, daß er mit Vollast arbeitet, wenn die Dampfmaschine (7) mit 5 % Last arbeitet.

## Revendications

1. Ensemble de moteur comprenant un moteur à combustion interne (1) et un moteur à vapeur (7) du type à piston, ayant une capacité de freinage intégrée, raccordés à un ensemble d'entraînement (23), par exemple un arbre d'entraînement commun, et un échangeur de chaleur (4) grâce auquel les pertes de chaleur du moteur à combustion interne provenant des gaz d'échappement et/ou de l'eau de refroidissement sont utilisées pour produire de la vapeur pour le moteur à vapeur, en plus de laquelle la vapeur en excès provenant de l'échangeur de chaleur (4), qui n'est pas nécessaire pour l'entraînement du moteur à vapeur, est envoyée vers un volume tampon pour vapeur (20), qui est conçu pour envoyer de la vapeur à haute densité de puissance au moteur à vapeur pendant de courtes périodes, caractérisé en ce que le moteur à combustion interne (1) est conçu pour fonctionner à pleine charge ou presque pleine charge, lors de cycles de conduite normale, et en même temps, que le moteur à vapeur (7) est conçu pour fonctionner à faible charge.

2. Ensemble de moteur selon la revendication 1, caractérisé en ce que le moteur à combustion interne (1) est un moteur diesel et le moteur à vapeur (7) est un moteur à piston axial multi-cylindres conçu pour une pression de vapeur de 250 bars et une température de vapeur de 500°C.

3. Ensemble de moteur selon la revendication 1 ou 2, en particulier pour la propulsion de véhicules lourds tels que des camions, des trains marchandise ou des bateaux, caractérisé en ce que le moteur à combustion interne (1) est conçu pour fonctionner à pleine charge lorsque le moteur à vapeur (7) fonctionne à 5 % de charge.
